# EUROPÄISCHE PATENTANMELDUNG

(11) **EP 0 786 654 A2**
(43) Veröffentlichungstag der Anmeldung: **30.07.1997**
(21) Anmeldenummer: 97107520.5
(22) Anmeldetag: 07.05.1997
(51) Int. Cl.: G01M 3/18

(54) **Behälter-Dichtheitsprüfanlage**

(71) Anmelder: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG

(57) **Zusammenfassung**

Für Dichtheits-Prüfanlagen mit mehreren Prüfstationen (1) wird vorgeschlagen, die Dichtheits-relevanten Messignale aus den Kammern über Multiplexer (5) einer zentralen Auswertung (9) zuzuführen.

## Beschreibung

Die vorliegende Erfindung betrifft eine Behälter-Dichtheitsprüfanlage nach dem Oberbegriff von Anspruch 1.

Es sind Prüfanlagen der genannten Art bekannt, bei welchen, betrachtet am Karussell, die jeweiligen Prüfstationen in einer ersten Drehwinkelposition des Karussells druckbeaufschlagt werden, sei dies, bei offenen Behältern, deren Inneres, oder sei dies, bei geschlossenen Behältern, entsprechende Prüfkammern an der Prüfstation, und bei denen der von der Dichtheit der zu prüfenden Behälter abhängige Druck in mindestens einer weiteren, vorgegebenen Drehwinkelposition des Karussells erfasst und ausgewertet wird. Dieses bekannte Vorgehen bzw. derartige Prüfanlagen sind unter verschiedenen Aspekten nachteilig. Weil die Druckerfassung bei Durchlaufen eines bestimmten Drehwinkels, generell z.B. bei Linearförderern einer bestimmten Position, durch die jeweilige Prüfkammer erfolgt, steht für die Druckerfassung, in Funktion der Drehgeschwindigkeit - bzw. generell der Geschwindigkeit - und damit der Durchlaufrate, nur eine beschränkte Zeit zur Verfügung. Dies limitiert die Rate an pro Zeiteinheit Prüfbaren Behältern und ist insbesondere bei kontinuierlichem Karussell-Betrieb problematisch. Im weiteren ist die Verfolgung von zeitlichen Verlaufen des leckageabhängigen Druckes nicht möglich, weil vorgesehene Drucksensoren nur zu bestimmten Zeiten messwirksam wurden.

Anlagen für höchst zuverlässige Dichtheitsprüfung weisen deshalb, fest den mit dem Karussell umlaufenden Prüfstationen zugeordnet, je mindestens einen Druckmessensor auf sowie eine ebenso fest zugeordnete Auswerteelektronik, was erlaubt, die Prüfung an den Prüfstationen frei im gesamten Zeitabschnitt vorzunehmen, während welchem ein in eine Prüfstation am Karussell geladener Behälter mit dem Karussell umläuft.

Dieses letzterwähnte Vorgehen bzw. die entsprechenden Anlagen sind wohl von extrem hoher Detektionsgenauigkeit, sind aber auch entsprechend aufwendig, indem, wie erwähnt, autonom, jede Prüfstation mit der notwendigen Auswerteelektronik ausgerüstet ist.

Die vorliegende Erfindung bezweckt, eine Behälter-Dichtheitsprüfanlage eingangs genannter Art zu schaffen, bei welcher einerseits, wenn überhaupt, die Detektionsgenauigkeit gegenüber den letzterwähnten Anlagen nur unwesentlich verringert wird, welche aber mit wesentlich geringerem Aufwand realisierbar ist. Zu diesem Zweck zeichnet sich die Anlage eingangs genannter Art nach dem Kennzeichen von Anspruch 1 aus.

Bei der Dichtheitsprüfung gefüllter - insbesondere mit Flüssigfüllgut gefüllter - Behälter besteht, wie in der gleichzeitig mit vorliegender Anmeldung eingereichten, weiteren Anmeldung Nr. (Anhang A) ausführlich beschrieben, das Problem, dass bei Anlegen eines Unterdruckes an der Behalterumgebung ein Leck an Füllgutflüssigkeit-beaufschlagten Wandungspartien schlecht detektierbar ist. Die nach aussen tretende Flüssigkeit wirkt dort praktisch selbstdichtend. Eine zuverlässige Dichtheitsprüfung ist bei solchen Behältern nur dann gewährleistet, wenn ein Leck in einem Wandungsbereich an einen Lufteinschluss im Innern des Behälters liegt. Aus diesem Grund wurde in der obgenannten, miteingereichten Anmeldung (Anhang A) vorgeschlagen, gleichzeitig zur Dichtheitsprüfung durch Druckbeobachtung an der Behälterumgebung, unmittelbar an der Wandung des Behälters eine Impedanzmessung vorzunehmen, aus der Erkenntnis, dass austretende Flüssigkeit sofort zu einer Impedanzänderung an einer Messstrecke zwischen mindestens einem Paar von Messelektroden führt.

Unter diesem Aspekt wird nun für die Prüfung von Behältern, welche mit flüssigem Füllgut gefüllt sind, vorgeschlagen, je mindestens ein Paar in einem Aufnahmeraum für jeweils mindestens einen Behälter freiliegende, beabstandete Elektroden vorzusehen, wobei die Auswerteeinheit, unter dem Aspekt von Anspruch 1, für alle Prüfstationen zentral vorgesehen, wiederum über eine Multiplexereinheit mit den jeweiligen Elektrodenpaaren wirkverbunden ist. Damit wird es möglich, sowohl eine Auswerteeinheit für die Druckerfassungsprüfung wie auch eine Auswerteeinheit für Impedanzerfassungsprüfung zentral für alle am Karussell vorgesehenen Prüfstationen vorzusehen, und zeitgestaffelt die jeweiligen Drucksensor- bzw. Impedanz-Messstrecken-Ausgänge auf die zugehörigen Auswerteeinheiten zu - in der Zeit - multiplexen.

Dabei wird in einer weiteren bevorzugten Ausführungsform für die Auswerteeinheit, welche auf die Elektroden geschaltet wird und für die Auswerteeinheit, welche mit den Drucksensoren wirkverbunden wird, ein und dieselbe, zentrale Auswerteeinheit eingesetzt. Dies ist ohne weiteres möglich, indem einerseits Drucksensoren üblicherweise ein Spannungssignal abgeben, und insbesondere bei einer DC-Widerstandsmessung als Impedanzmessung eine mit dem zu messenden, variablen Widerstand bestückte Messschaltung, wie ein Spannungsteiler, ohne weiteres ebenfalls so ausgelegt werden kann, dass das widerstandsabhängige Ausgangssignal ein Spannungssignal ist. Durch dieses Vorgehen wird der Aufwand für gleichzeitige Druck- und Impedanzprüfung besonders gering.

Es ergibt sich damit auch die Möglichkeit, die zwischen Impedanz-Messstrecken und Auswerteeinheit einerseits und die zwischen Drucksensoren und Auswerteeinheit anderseits vorgesehenen Multiplexer-Einheiten durch eine einzige, gemeinsame und entsprechend zeitgesteuerte Multiplexer-Einheit zu realisieren, welche die den Drucksensor- und Impedanzmessstrecken entsprechende Anzahl Eingänge auf einen einzigen Ausgang zur vorgesehenen, zentralen Auswerteeinheit hin umschaltet.

In der WO94/05991 desselben Anmelders wie die vorliegende Anmeldung ist ein Druck-Dichtemessverfahren ausführlich erläutert, bei welchem der Ausgang eines Drucksensors in einem ersten Zeitpunkt auf beide Eingänge einer Differenz-Einheit geschaltet wird. Das gegebenenfalls verstärkte Ausgangssignal der Differenzeinheit wird als Null-Offset-Signal interpretiert und abgespeichert. Bei der Druckerfassung in einem zweiten Zeitpunkt wird das vorabgespeicherte Null-Offset-Signal als Nullkompensationssignal aufgeschaltet, was ermöglicht, mit hoher Verstärkung das entsprechende Druckdifferenz-Signal elektrisch auszuwerten.

Dieses Vorgehen wird auch bei der Anlage gemäss vorliegender Erfindung gegebenenfalls eingesetzt, indem die Auswerteeinheit so ausgebildet ist, dass ein in einem ersten Zeitpunkt auftretendes Eingangssignal-abhängiges Signal als Nullreferenzsignalwert abgespeichert wird und darnach als Nullabgleichsignal aufgeschaltet wird. In einem zweiten, nachfolgenden Zeitpunkt wird nun bezüglich des abgeglichenen Nullwertes als Differenz ein weiteres eingangsabhängiges Signal, gegebenenfalls verstärkt, als Auswertesignal ausgewertet. Dieses Vorgehen kann bei gleichzeitigem Vorliegen einer Drucksensorauswertung und einer Impedanzauswertung für beide Ausertungen eingesetzt werden, indem auch bezüglich Impedanzmessung, die letztlich auf einer Impedanz-Differenzmessung beruht, die auftretende Impedanz-Differenz bezüglich der exakt, abgeglichenen Nullreferenz erfolgen kann.

Die Erfindung wird anschliessend beispielsweise anhand von Figuren erläutert. Es zeigen:
- Fig. 1: ein Signalfluss/Funktionsblockdiagramm einer erfindungsgemässen Behälter-Dichtheitsprüfanlage, bei der die Dichtheitsprüfung aufgrund einer Druckmessung an den jeweiligen Prüfstationen erfolgt,
- Fig. 2: in einer Darstellung analog zu derjenigen von Fig. 1 die Weiterausbildung der erfindungsgemässen Anlage für die Dichtheitsprüfung sowohl anhand von Druck- wie auch von Impedanzmessung und
- Fig. 3: beispielsweise den zeitlichen Verlauf von Prüfdruck oder Prüfwiderstand und eine bevorzugte Vorgehensweise zur Signalauswertung.

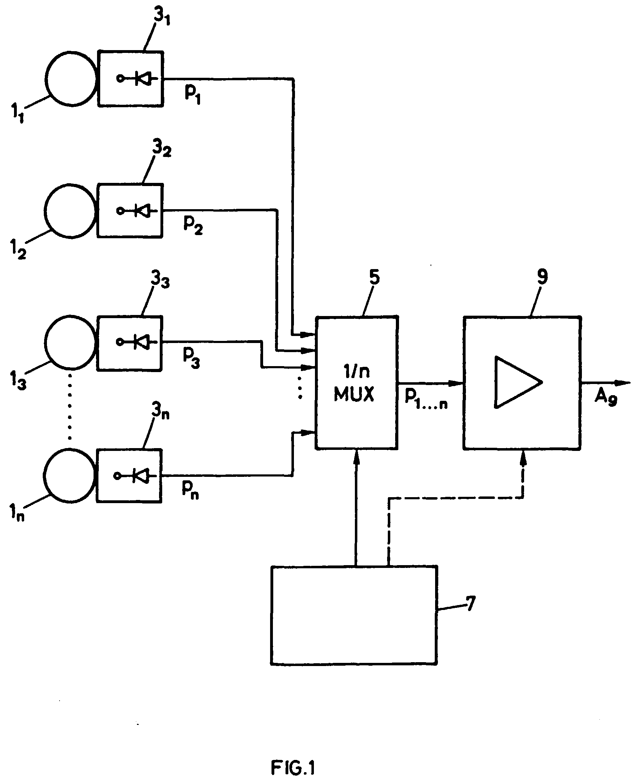

Gemäss Fig. 1 sind an einem Karussell (nicht dargestellt) mehrere, wie beispielsweise n Prüfstationen 1₁, 1₂, ... 1ₙ vorgesehen. In der Figur sind sie linear angeordnet dargestellt, der Übersicht halber, am Karussell sind sie entlang der Karussell-Peripherie angeordnet.

Jeder Prüfstation 1 ist mindestens ein entsprechender Drucksensor 3₁, 3₂, 3₃, ... 3ₙ zugeordnet. Die Drucksensoren 3ₓ geben jeweils ein von der Leckage am mindestens einen in der jeweiligen Prüfstation 1 angeordneten Behälter abhängiges elektrisches Signal, entsprechend p₁ bis pₙ, ab.

Bei den Prüfstationen 1ₓ und den ihnen jeweils zugeordneten Drucksensoren 3ₓ kann es sich um folgende Stationen handeln:
a) Haltestationen für dichtes Verschliessen offener Behälter, an denen bezüglich Umgebungsdruck ein Innen-, Über- oder Unterdruck erstellt wird. Der zugeordnete Drucksensor misst hier den leckageabhängigen Innendruck eines solchen Behälters.
b) Geschlossene Behälter werden in eine Dichtheits-Prüfkammer der Station 1ₓ eingebracht oder durch letztere dichtend verschlossen, wobei die Behälter gefüllt oder leer sind. Es wird eine Druckdifferenz zwischen Behälterinnenraum und umgebenenden Kammerraum erstellt, sei dies durch Unterdruck- oder Überdruckbeaufschlagung des Behälter-Innenraumes und/oder durch Überdruck- oder Unterdruckbeaufschlagung des umgebenden Kammerraumes. Der zugeordnete Drucksensor misst den Druckverlauf entweder im Innern des Behälters oder in der Prüfkammer. Üblicherweise wird dieses Vorgehen für geschlossene, gefüllte Behälter eingesetzt, die Prüfkammer mit Unterdruck beaufschlagt, bezogen auf den Behälterinnendruck, und die Druckentwicklung in dem den Behälter umgebenden Kammerraum mit dem zugeordneten Drucksensor erfasst.

Gemäss Fig. 1 werden nun die elektrischen Ausgänge der Sensoren 3ₓ auf eine Multiplexer-Einheit 5 geschaltet, welche, gesteuert durch eine Zeitgebereinheit 7, sequentiell jeweils einen der Drucksensoren nach dem andern auf eine Auswerteeinheit 9 schaltet, entsprechend dem Signal p_{1...n}. An der Auswerteeinheit 9 wird sequentiell jedes durchgeschaltete, leckageabhängige Signal p₁ bis pₙ ausgewertet und am Ausgang A₉, entsprechend vorgegebenen Schwellwerten für diese Signale, wird angezeigt, in welcher der Stationen 1ₓ ein als leckend befundener Behälter vorhanden ist. Selbstverständlich ist hierzu an der Auswerteeinheit 9 eine Komparatoreinheit vorgesehen, welcher der Schwellwert eingegeben ist für die Selektion leckend/nichtleckend und ausgangsseitig eine Speichereinheit zur Registrierung derjenigen Prüfstationen, deren Sensorausgangssignal auf ein Lecken des enthaltenen Behälters schliessen lässt.

Auf diese Art und Weise wird erreicht, dass eine der Karusselgrösse entsprechende Anzahl Prüfstationen, je mit zugeordnetem Drucksensor, mittels einer einzigen Auswerteeinheit behandelt werden können.

Wie eingangs erwähnt, können insbesondere dann, wenn mit Flüssigfüllgut gefüllte Behälter nach dem oben unter b) kurz beschriebenen Prinzip auf Dichtheit geprüft werden, und wie in der gleichzeitig eingereichten Anmeldung Nr. ... (Anhang A) desselben Anmelders ausführlich erläutert, Probleme entstehen, welche durch gleichzeitige Druckauswertung und Impedanzauswertung, unmittelbar ausserhalb der Behälter, behoben werden können.

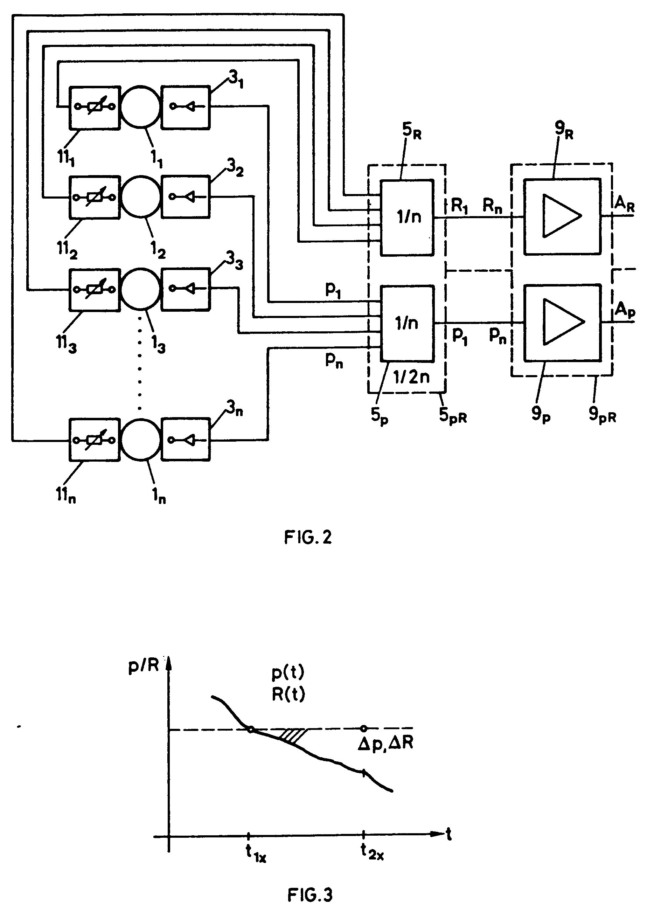

In Fig. 2 ist der Erfindung, gemäss vorliegender Anmeldung folgend, eine hierfür geeignete Anlage in Darstellung analog zu derjenigen von Fig. 1 schematisch dargestellt. Entsprechend ist jeder der Prüfkammern 1₁ bis 1ₙ nebst mindestens einem Drucksensor 3₁ bis 3ₙ eine Impedanzmessstrecke mit mindestens zwei Elektroden zugeordnet, schematisch in Fig. 2 mit 11₁ bis 11ₙ dargestellt. Mit den mindestens zwei Abgriffselektroden umfassenden Impedanzmessstrecken in der Prüfkammer der Prüfstationen 1ₓ, unmittelbar an der Aussenwand des jeweiligen zu prüfenden Behälters angeordnet, wird erfasst, wenn durch eine vorgesehene Leckage Flüssigfüllgut nach aussen tritt, nach aussen getrieben durch einen in der Prüfkammer erstellten Unterdruck mit Bezug auf den Behälterinnendruck.

Dem Prinzip von Fig. 1 folgend werden nun weiterhin die elektrischen Ausgänge mit den Signalen p₁ bis pₙ der Multiplexer-Einheit 5ₚ zugeschaltet, während die Ausgänge der Impedanzmessstrecken 11ₓ einer weiteren Multiplexer-Einheit 5_{R} zugeschaltet sind. Die Ausgange mit den Signalen p₁ bis pₙ bzw. R₁ bis Rₙ werden gemäss Fig. 2 je ihnen zugeordneten Auswerteeinheiten 9_{R} bzw. 9ₚ zugeschaltet. Wiederum werden nacheinander an den jeweiligen Auswerteeinheiten die jeweils aufgeschalteten Signale an einem vorgegebenen Schwellwert gemessen und demnach ein Ausgangssignal A_{R} bzw. Aₚ ausgegeben, das anzeigt, in welcher Kammern 1 ein als leckend befundener Behälter vorliegt. Wenn bei dieser Anlagenkonfiguration an einer der beiden Auswerteeinheiten, d.h. bezüglich Druck und/oder bezüglich Impedanz, leckageidentifizierende Signale erfasst worden sind, wird der entsprechende Behälter als leckend erkannt und die entsprechende Kammernummer abgespeichert.

Üblicherweise wird die Impedanzmessung als DC-Widerstandsmessung realisiert. Weil Drucksensoren normalerweise ein vom detektierten Druck abhängiges Spannungssignal abgeben und es ohne weiteres möglich ist, eine Widerstandmessung so vorzunehmen, dass das widerstandsabhängige Signal ein Spannungssignal ist, wird nun, wie in Fig. 2 gestrichelt dargestellt, in einer weiteren, bevorzugten Ausführungsform nebst einem einzigen Multiplexer 5_{pR} insbesondere eine einzige Auswerteeinheit 9_{pR} vorgesehen, wobei der Multiplexer 5_{pR} mit einem einzigen Ausgang auf den Eingang der vorgesehenen Auswerteeinheit 9_{pR} geschaltet ist. Eine (hier nicht dargestellte) Zeitgebereinheit schaltet an der kombinierten Auswerteeinheit, je nach dem, ob ein Druckmessignal oder ein Widerstandsmessignal momentan aufgeschaltet ist, z.B. einen entsprechenden Druckschwellwert oder einen entsprechenden Widerstandsschwellwert als Vergleichsbasis auf, und die nun sequentiell anfallenden, auf eine einzige Kammer bezogenen beiden Prüfsignale werden zur nachfolgenden Auswertung, wie ohne weiteres nachvollziehbar, zwischengespeichert.

In der WO94/05991 desselben Anmelders wie die vorliegende Erfindung ist bezüglich Druckprüfung ein Vorgehen beschrieben, mittels welchem die realisierte Auflösung drastisch erhöht werden kann, d.h. sehr kleine Lecks detektierbar werden. Diesbezüglich wird ausdrücklich auf den Inhalt dieser Schrift verwiesen. In Fig. 3 soll das in der erwähnten WO beschriebene Prinzip kurz dargestellt und erläutert werden, wie dieses an der dieser Anmeldung zugrundeliegenden Anlage integriert wird.

Über der Zeitachse t ist in Fig. 3 der Verlauf eines registrierten Druckes oder eines an den Messstrecken 11ₓ erfassten Widerstandswertes Rₓ dargestellt. Dieser Verlauf ist rein qualitativ zu verstehen. Grundsätzlich bewirkt eine vorhandene Leckage, dass ein in der Prüfkammer erstellter Unterdruck mit der Zeit zu stark abnimmt, weil sich ein Druckausgleich zwischen Behälterinnenraum und Prüfkammervolumen ergibt, während üblicherweise aus einem Leck austretende Füllgutflüssigkeit ein Abnehmen des erfassten Widerstandes unmittelbar an der Behälterwand ergibt. Gemäss Fig. 3 wird, dem oben erwähnten Prinzip folgend, an jeder Kammer der Stationen 1ₓ in einem ersten Zeitpunkt t₁ₓ der Druckwert bzw. der Widerstandswert, der dann vorherrscht, erfasst. Dieser Signalwert wird gespeichert und an der Auswerteeinheit beiden Eingängen einer darin vorgesehenen Differenzbildungseinheit zugeführt. Bei idealen Abgleichbedingungen sollte ausgangsseits der Differenzbildungseinheit und nach entsprechender Verstärkung das Signal "Null" erscheinen. Ein vom Nullwert abweichendes Signal wird als Nullpunkt-Abweichung interpretiert und ebenfalls abgespeichert. In einem zweiten, nachfolgenden Zeitpunkt t₂ₓ wird ein zweiter Druck- bzw. Widerstandswert erfasst. Der im zweiten Zeitpunkt erfasste Wert wird mit dem im ersten Zeitpunkt erfassten und abpespeicherten verglichen, wobei das ebenfalls erfasste Nullpunkt-Abweichsignal vorzeichenrichtig berücksichtigt wird. Das Vergleichsresultat Δₚ bzw. Δ_{R} kann nun fehlerfrei mit hoher Verstärkung ausgewertet werden. Wird dieses Vorgehen an der Anlage gemäss Fig. 1 oder Fig. 2 realisiert, so werden, wie sich ohne weiteres ergibt, die vorgesehenen Messstrecken, seien dies Drucksensor- und/oder die Impedanzmessstrecken, sequentiell zu ersten und zweiten Zeitpunkten abgetastet, was durch entsprechende Ansteuerung der vorgesehenen Multiplexer erfolgt. Dabei ist es keinesfalls zwingend, dass die Abtastungen entsprechend t₁ₓ und t₂ₓ von Fig. 3 unmittelbar aufeinander folgend vorgenommen werden. Je nach Optimierung der Zeitverhältnisse können beispielsweise auch erst alle t₁ₓ-Werte erfasst werden, mit entsprechender Zwischenspeicherung, und darnach alle t₂ₓ-Werte für die Auswertung.

Auch in diesem Fall kann die gesamt Auswertung mit einer einzigen Auswerteeinheit vorgenommen werden, deren Eingang die zeitsequentiell abgefragten Druck- und Impedanzwerte zugeführt werden. Auf diese Art und Weise lassen sich auch komplexere Abfragerhythmen und entsprechend hohe Leckageauflösungen mit einer einzigen Auswerteeinheit und vorgeschalteter Multiplexer-Einheit realisieren.

## Patentansprüche

1. Behälter-Dichtheitsprüfanlage mit einem Förderer mit mehreren Prüfstationen (1ₓ) je für mindestens einen Behälter, je mindestens einem Drucksensor (3ₓ) an jeder Prüfstation (1ₓ), der ausgangsseitig mit dem Eingang einer Auswerteeinheit (9) wirkverbunden ist, dadurch gekennzeichnet, dass für mehrere der Drucksensoren (3ₓ) gemeinsam eine Auswerteeinheit (9) vorgesehen ist, und dass weiter einem Eingang der Auswerteeinheit (9) und den Ausgängen der Drucksensoren (3ₓ) eine mittels einer Zeitgebereinheit (7) getaktete Multiplexereinheit (5) zwischengeschaltet ist.

2. Anlage nach Anspruch 1, dadurch gekennzeichnet, dass die Prüfstation (1ₓ) je mindestens ein Paar in einem Aufnahmeraum für einen Behälter freiliegender, beabstandeter Elektroden umfasst, und dass eine Auswerteeinheit (9ᵣ) vorgesehen ist, die über eine Multiplexer-Einheit (5_{R}), die durch eine Zeitgebereinheit getaktet ist, mit den Elektroden-Anschlüssen an jeder der mehreren Prüfstationen (1ₓ) wirkverbunden ist.

3. Anlage nach Anspruch 2, dadurch gekennzeichnet, dass die Auswerteeinheit, die mit den Elektroden-Anschlüssen wirkverbindbar ist und diejenige, die mit den Drucksensorausgängen wirkverbindbar ist, dieselbe Auswerteeinheit (9_{pR}) ist.

4. Anlage nach einem der Ansprüche 2 oder 3, dadurch gekennzeichnet, dass die der Auswerteeinheit, welche mit den Elektroden-Anschlüssen wirkverbindbar ist und die der Auswerteeinheit, welche mit den Drucksensoren wirkverbindbar ist, vorgeschaltete Multiplexereinheiten durch eine Multiplexereinheit (5_{pR}) gebildet sind.

5. Anlage nach einem der Ansprüche 1 bis 4, dadurch gekennzeichnet, dass die Auswerteeinheit so ausgebildet ist, dass ein in einem ersten Zeitpunkt (t₁) auftretender, von einem Eingangssignal abhängiger Signalwert als Nullreferenzwert abgespeichert wird und darnach als Nullabgleichsignal aufgeschaltet wird und der in einem zweiten, nachfolgenden Zeitpunkt (t₂) auftretende Signalwert als Auswertesignal/Dichtheitsbewertungssignal ausgewertet wird.

6. Anlage nach einem der Ansprüche 1 bis 5, dadurch gekennzeichnet, dass der Förderer ein Karussell ist.
